Europäisches Patentamt

European Patent Office

Office européen des brevets

(11) Veröffentlichungsnummer: **0 507 229 A1**

# EUROPÄISCHE PATENTANMELDUNG

(21) Anmeldenummer: **92105392.2**

(22) Anmeldetag: **28.03.92**

(51) Int. Cl.5: **B23K 35/30**, C22C 38/58, C22C 38/00

(30) Priorität: **03.04.91 DE 4110695**

(43) Veröffentlichungstag der Anmeldung:
**07.10.92 Patentblatt 92/41**

(84) Benannte Vertragsstaaten:
**AT BE DE DK ES FR GB IT NL SE**

(71) Anmelder: **Thyssen Schweisstechnik GmbH**
**Wilhelmstr. 2**
**W-4700 Hamm 1(DE)**

(72) Erfinder: **Gillessen, Christoph, Dr.**
**Lilienstrasse 115a,**
**W-4152 Kempen 1(DE)**
Erfinder: **Ladwein, Thomas, Dr.**
**Hubertusstrasse 150**
**W-4150 Krefeld(DE)**
Erfinder: **Lunebach, Detlev, Dr.**
**Pappenstrasse 41**
**W-4100 Duisburg(DE)**

(74) Vertreter: **Werner, Dietrich H. et al**
**Cohausz & Florack Schumannstrasse 97**
**W-4000 Düsseldorf 1(DE)**

(54) **Zusatzwerkstoff zum Schweissen hochkorrosionsbeständiger austenitischer Stähle.**

(57) Die Erfindung betrifft einen vollaustenitischen Schweißzusatzwerkstoff zur Erzeugung von gegen Loch- und Spaltkorrosion und/oder den Angriff oxidierender Medien beständigen Verschweißungen korrosionsbeständiger Stähle, die eine Wirksumme % Cr + 3,3 % Mo + 30 x % N gleich oder größer 35 haben, oder zur Erzeugung von entsprechenden Auftragschweißungen, der aus (Massengehalte in %)
höchstens 0,04 % C,
höchstens 1,0 % Si,
2,0 bis 8,9 % Mn,
4,0 bis 9,0 % Mo,
15,0 bis 30,0 % Ni,
20,0 bis 30,0 % Cr,
0,31 bis 0,8 % N,
höchstens 0,01 % Ti,
höchstens 0,0050 % B,
höchstens 0,040 % P,
höchstens 0,030 % S,
0 bis 2,0 % Cu,
0 bis 1,0 % V,
0 bis 1,0 % W,
0 bis 1,0 % Nb,
Rest Eisen
besteht und eine Wirksumme (% Cr) + 3,3 (% Mo) + 30 (% N) größer 52 hat.

Die Erfindung betrifft einen Zusatzwerkstoff zum Schweißen hochkorrosionsbeständiger austenitischer Stähle.

Für chloridhaltigen Medien ausgesetzte Teile, die ausgezeichnete Lochfraßbeständigkeit und Beständigkeit gegen abtragende Korrosion in oxidierenden Säuren haben müssen, haben sich Werkstoffe mit einer hohen Wirksumme (Pitting Resistance Equivalent, PRE) PRE = % Cr + 3,3 x % Mo + 30 x % N > 45, die eine kritische Lochfraßtemperatur (Critical Pitting Temperature, CPT), ermittelt in 6 % FeCl$_3$ von mehr als 80 °C aufweisen, bewährt, z. B. der Stahl 1.4565 mit 24 % Cr, 17 % Ni, 4,5 % Mo, 6 % Mn und 0,4 % N. Es ist Stand der Technik, die austenitischen Stähle, die hoch beständig gegen Loch- und Spaltkorrosion sind, mit hochmolybdänhaltigen Zusatzwerkstoffen auf Nickelbasis (z. B. SG-NiCr 20 Mo 15, 2.4839 oder SG-NiCr 21 Mo 9 Nb, 2.4831) zu verschweißen. Durch die hohen Mo-Gehalte soll die aufgrund des Gußgefüges geringere Beständigkeit der Schweißnaht kompensiert werden. Artgleiche Schweißzusatzwerkstoffe auf Eisenbasis werden nicht verwendet, da die mit ihnen hergestellten Schweißnähte nur eine sehr geringe Lochkorrosionsbeständigkeit aufweisen (Liljas, M.; B. Holmberg; A. Ulander: Stainless Steels '84, Seiten 323 bis 329, The Institute of Metals, London 1985).

Für den Einsatz in Lochfraß auslösenden Medien, z. B. in Rauchgas-Entschwefelungsanlagen oder Offshore-Anlagen, steht mit (SG-NiCr 20 Mo 15 bzw. E-NiCr 19 Mo 15) ein Schweißzusatzwerkstoff zur Verfügung, mit dem an Stählen des obengenannten Typs Schweißverbindungen hergestellt werden können, welche nahezu die gleiche hohe Lochfraßbeständigkeit aufweisen wie der ungeschweißte Grundwerkstoff. In oxidierenden Säuren dagegen werden mit diesem Zusatz hergestellte Nähte durch örtlichen Abtrag angegriffen. Hier ist die Verwendung eines Schweißzusatzes vom Typ SG-NiCr29Mo, 2.4656 von Vorteil. Damit stehen für beide Beanspruchungsarten geeignete Schweißzusatzwerkstoffe zur Verfügung.

Unter komplexen, sowohl Lochfraß auslösenden als auch oxidierenden Bedingungen werden die gegen Lochfraß beständigen Schweißzusatzwerkstoffe mit ca. 20 % Cr durch gleichförmigen Abtrag und die gegen oxidierende Säuren beständigeren höher chromhaltigen Legierungen durch Lochfraß und Spaltkorrosion angegriffen. Es besteht daher ein Bedarf für einen beiden Beanspruchungen genügenden und daher universell einsetzbaren Schweißzusatz.

Zur Lösung dieser Aufgabe wird erfindungsgemäß ein vollaustenitischer Schweißzusatzwerkstoff zur Erzeugung von gegen Loch- und Spaltkorrosion und/oder den Angriff oxidierender Medien beständigen Verschweißungen korrosionsbeständiger Stähle, die eine Wirksumme % Cr + 3,3 % Mo + 30 x % N gleich oder größer 35 haben, oder zur Erzeugung von entsprechenden Auftragschweißungen, der aus (Massengehalte in %)

höchstens 0,04 % C,
höchstens 1,0 % Si,
2,0 bis 8,9 % Mn,
4,0 bis 9,0 % Mo,
15,0 bis 30,0 % Ni,
20,0 bis 30,0 % Cr,
0,31 bis 0,8 % N,
höchstens 0,01 % Ti,
höchstens 0,0050 % B,
höchstens 0,040 % P,
höchstens 0,030 % S,
0 bis 2,0 % Cu,
0 bis 1,0 % V,
0 bis 1,0 % W,
0 bis 1,0 % Nb,
Rest Eisen

besteht und eine Wirksumme (% Cr) + 3,3 (% Mo) + 30 (% N) größer 52 hat.

Vorteilhafte Zusammensetzungen sind in den Unteransprüchen gekennzeichnet.

Mit der erfindungsgemäßen Zusammensetzung steht zum ersten Mal ein Schweißzusatzwerkstoff auf Eisenbasis zur Verfügung, mit dem an hochlegierten Stählen Schweißverbindungen herzustellen sind, deren Loch- und Spaltkorrosionsbeständigkeit der des ungeschweißten Grundwerkstoffes entspricht. Von besonderer Bedeutung für die Loch- und Spaltkorrosionsbeständigkeit der mit dem erfindungsgemäßen Zusatzwerkstoff hergestellten Nähte ist der hohe Stickstoffgehalt, der jedoch nur wirksam sein kann, wenn er auch im niedergeschmolzenen Schweißgut interstitiell gelöst vorliegt. Durch eine ausgewogene Legierungszusammensetzung wurde erreicht, daß die Stickstofflöslichkeit des durch Aufmischung erzeugten Schweißgutes so hoch ist, daß keine nennenswerte Ausgasung von Stickstoff erfolgt und keine Poren gebildet werden. Im übrigen war die Legierung so einzustellen, daß ein vollaustenitisches Gefüge und eine Wirksumme PRE > 52 erreicht werden.

Zur Legierungszusammensetzung im einzelnen:

Die Beschränkung des Kohlenstoffgehalts auf höchstens 0,04 % dient der Vermeidung der Carbidbildung, welche insbesondere die interkristalline Korrosion begünstigt.

Die Begrenzung des Siliziumgehalts auf höchstens 1 % dient der Sicherung der Korrosionsbeständigkeit.

Die Festlegung des Mangangehalts auf 2,0 bis 8,9 % wurde im Hinblick auf die Löslichkeit von Stickstoff vorgesehen. Je höher der Stickstoffgehalt des Stahls ist, desto höher wird in dem angegebenen Bereich der Mangangehalt festzulegen sein.

Molybdän in Mengen von 4 bis 9 % dient der Sicherung der Korrosionsbeständigkeit, insbesondere der Beständigkeit gegen Loch- und Spaltkorrosion.

Nickel in Mengen von 15 bis 30 % ist erforderlich, um den Stahl vollaustenitisch zu machen.

Phosphor und Schwefel sind zu begrenzen, da sie die Verformbarkeit und die Korrosionsbeständigkeit negativ beeinflussen und die Heißrißgefahr beim Schweißen erhöhen.

Zugaben von Bor dienen der Verbesserung der Warmverformbarkeit. Der Borgehalt ist zu begrenzen, da bei zu hoher Borkonzentration schädliche Boride gebildet werden.

Chrom ist mit 20 bis 30 % erforderlich, um die Korrosionsbeständigkeit und insbesondere die Beständigkeit gegen Loch- und Spaltkorrosion zu gewährleisten. Bevorzugt wird ein Gehalt im Bereich von mehr als 25 % bis weniger als 27 % Cr.

Ein Gehalt an Stickstoff im Bereich von 0,31 bis 0,8 % sichert Dehngrenzenwerte von mindestens 370 $N/mm^2$ und eine hohe Beständigkeit gegen Loch- und Spaltkorrosion. Darüber hinaus verzögert Stickstoff die Ausscheidung von intermetallischen Phasen und Carbiden, die wie schon erwähnt, einen ungünstigen Einfluß auf die Korrosionsbeständigkeit haben.

Ein Gehalt von max. 0,01 % Titan wird festgelegt, um die Bildung von Titannitrid zu verhindern, denn Stickstoff soll in gelöster Form im Stahl enthalten sein, um die erwähnten Wirkungen ausüben zu können.

Günstigste Eigenschaften wurden bei einem Molybdängehalt im Bereich von 5 bis 6 % und einem Stickstoffgehalt im Bereich von 0,4 bis 0,6 % ermittelt.

Zugaben von Vanadium und Niob wirken festigkeitserhöhend und lassen Werte von über 370 $N/mm^2$ erreichen. Da diese Elemente Nitride bilden, die die Korrosionsbeständigkeit beeinträchtigen können, sind ihre Gehalte zu begrenzen. Kupfer erhöht in Mengen bis 2 % die Beständigkeit in reduzierenden Säuren. Ein Wolframgehalt bis 1,0 % dient der weiteren Verbesserung der Beständigkeit gegen Lochkorrosion.

Der erfindungsgemäße Stahl als Schweißzusatzwerkstoff erfüllt die gestellten Forderungen nach ausreichender Korrosionsbeständigkeit, insbesondere Beständigkeit gegen Loch- und Spaltkorrosion wie anhand der folgenden Beispiele nachgewiesen wird.

Die Versuchswerkstoffe hatten die Zusammensetzungen gemäß Tafel 1. Mit Stäben von 4 mm Durchmesser wurden am Werkstoff Nr. 1.4565 WIG (Wolfram-Inert-Gas)-Auftragschweißungen in Nuten durchgeführt. Diese Proben wurden folgenden Tests unterzogen:

- Ermittlung der kritischen Lochfraßtemperatur in 6%iger $FeCl_3$- bzw. 3%iger NaCl-Lösung bei 950 $mV_H$,
- Huey-Test,
- Streicher-Test,
- Test unter simulierten Bleichstufenbedingungen.

Die Ergebnisse dieser Tests sind in Tafel 2 dargestellt. Die mit den erfindungsgemäßen Zusatzwerkstoffen geschweißten Proben weisen kritische Lochfraßtemperaturen in 6 % $FeCl_3$ und in 3 % NaCl, potentiostatisch bei 950 $mV_H$, zwischen 65 und 85 °C auf. Diese Werte liegen erheblich höher als die bisher an mit Eisenbasis-Schweißzusätzen hergestellten Verbindungen ermittelten. Die kritischen Lochfraßtemperaturen der Schweißproben, die mit Versuchswerkstoffen hergestellt wurden, deren Wirksumme 54 bis 56 beträgt, liegen im wesentlichen ebenso hoch wie die des Grundwerkstoffs. Im Huey-Test sind die Abtragsraten der mit den erfindungsgemäßen Zusätzen geschweißten Proben nur unwesentlich höher als die des ungeschweißten Grundwerkstoffs und unterschreiten deutlich die Werte der mit der hoch molybdänhaltigen Nickel-Basislegierung NiCr 20 Mo 15 hergestellten Schweißproben. Im Streicher-Test wurden ähnliche Ergebnisse erreicht.

Zur Ermittlung der Beständigkeit unter Bleichstufenbedingungen, wie sie bei der Zellstoff- und Papierherstellung vorliegen, wurden an den mit den Versuchswerkstoffen I und III geschweißten Proben Labortests unter folgenden Bedingungen durchgeführt:

70 °C, 600 ppm Cl, Versuchsdauer 26 h, potentiostatischer Halteversuch bei 700 und 900 $mV_{SCE}$

(SCE = Saturated Calomel Electrode)

Mit diesen Versuchsparametern lassen sich die tatsächlichen Bedingungen von D-Stage Bleichstufen simulieren.

Die mit den Schweißzusätzen I und III geschweißten Testproben zeigten weder Lochfraß noch allgemeine Korrosion. Demgegenüber zeigten Proben, die mit Schweißzusatzwerkstoffen auf Nickelbasis mit 9 % Mo (SG-NiCr 21 Mo 9 Nb, E-NiCr 20 Mo 9 Nb) und mit 15 % Mo (SG-NiCr 20 Mo 15, E-NiCr 19 Mo 15) geschweißt worden waren, einen Korrosionsangriff, der als räumlich beschränkte allgemeine Korrosion charakterisiert werden konnte. Mit SG-NiCr 29 Mo geschweißte Proben wurden durch Lochkorrosion angegriffen. Aus diesen Ergebnissen ist zu schließen, daß die Korrosionsbeständigkeit der mit den erfindungsgemäßen Stählen hergestellten Schweißraupen in allen durchgeführten Tests im wesentlichen der des Grundwerkstoffes entspricht.

Die Vorteile des erfindungsgemäßen Schweißzusatzwerkstoffes liegen in der Kombination der Beständigkeit gegen Lochfraß und Spaltkorrosion auslösende chloridhaltige Medien ebenso wie gegen oxidierende Säuren, die allgemeinen Abtrag verursachen, speziell auch gegen oxidierende Medien mit hohem Chloridgehalt. Diese Eigenschaftskombination weist kein bekannter Schweißzusatzwerkstoff auf. Somit steht zum ersten Mal ein Schweißzusatz zur Verfügung, der unter diesen komplexen Korrosionsbeanspruchungen beständig ist. Ein weiterer Vorteil sind die geringeren Werkstoffkosten des erfindungsgemäßen Schweißzusatzwerkstoffes auf Eisenbasis gegenüber den sonst gebräuchlichen Nickelbasislegierungen.

Neben Werkstoff-Nr. 1.4565 sind auch andere hoch korrosionsbeständige Sonderedelstähle mit Wirksummen von mehr als 35 wie z.B. 1.4529, UNS S 31254, 1.4539, UNS N 08367, 1.4563, 1.4439, 1.4462 mit einem solchen Zusatz zu verschweißen. Interessante Anwendungs- gebiete sind D-Stage Bleichstufen in der Papier- und Zellstoff-Industrie, Waschtürme und Reingaskanäle in Rauchgasentschwefelungsanlagen, Offshore-Anlagen und alle chemischen Prozeßanlagen, in denen hochkorrosionsbeständige Stähle wie die oben genannten eingesetzt werden.

TAFEL 1

| Nr. | C | Si | Mn | P | S | Cr | Mo | Ni | V | W | Cu | N | Wirksumme |
|---|---|---|---|---|---|---|---|---|---|---|---|---|---|
| I | 0,020 | 0,12 | 7,27 | 0,005 | 0,004 | 26,14 | 5,61 | 26,04 | - | - | 0,03 | 0,40 | 56,65 |
| III | 0,010 | 0,04 | 5,91 | 0,006 | 0,007 | 24,95 | 6,13 | 26,45 | - | - | 0,85 | 0,30 | 54,18 |
| IVa | 0,020 | 0,15 | 2,77 | 0,009 | 0,007 | 24,93 | 4,78 | 16,91 | - | - | - | 0,29 | 49,40 |
| IVb | 0,029 | 0,16 | 3,11 | 0,011 | 0,007 | 26,20 | 4,96 | 17,94 | - | - | - | 0,37 | 53,67 |
| V | 0,019 | 0,19 | 2,82 | - | - | 26,00 | 4,97 | 17,95 | - | - | 0,71 | 0,34 | 52,60 |
| VIa | 0,018 | 0,17 | 3,89 | 0,011 | 0,006 | 25,63 | 4,81 | 19,49 | - | - | - | 0,34 | 51,70 |
| VIb | 0,025 | 0,19 | 3,89 | 0,014 | 0,006 | 26,20 | 5,07 | 20,12 | - | - | - | 0,35 | 53,43 |
| VII | 0,018 | 0,20 | 3,81 | 0,013 | 0,006 | 26,10 | 4,96 | 19,10 | - | - | 0,71 | 0,40 | 54,47 |
| 2.4839* | $\leq$ 0,01 | $\leq$ 0,3 | $\leq$ 1,0 | $\leq$ 0,020 | $\leq$ 0,010 | 20,0 | 15,0 | Rest | ($\leq$ 1,5 Fe) | | | | $\approx$ 69,5 |
| 2.4656* | $\leq$ 0,02 | < 0,5 | 1 - 3 | $\leq$ 0,010 | $\leq$ 0,005 | 27-31 | 2,5-4,0 | 35-40 | | | | | $\approx$ 39 |

* Nickelbasis-Vergleichswerkstoffe

EP 0 507 229 A1

# EP 0 507 229 A1

TAFEL 2

| Probe Nr. | Krit. Lochfraßtemperatur | | Abtragsrate | |
|---|---|---|---|---|
| | FeCl$_3$ °C | NaCl °C | Huey-Test g/m$^2$h | Streicher-Test g/m$^2$h |
| 1.4565 | 85 | 85 | 0,07 | 0,16 |
| I | 85 | 80 | 0,12 | 0,24 |
| III | 85 | 80 | 0,12 | 0,27 |
| IVa | 75 | 65 | 0,09 | 0,17 |
| IVb | 85 | 80 | 0,09 | 0,15 |
| V | 75 | 70 | 0,09 | 0,17 |
| VIa | 75 | 70 | 0,09 | 0,20 |
| VIb | 75 | 70 | 0,09 | 0,14 |
| VII | 80 | 70 | 0,08 | 0,15 |
| 2.4839* | 85 | 85 | 0,32 | 0,28 |
| 2.4656* | 55 | 55 | 0,09 | 0,17 |

\* Nickelbasis-Vergleichswerkstoffe (s. Tafel 1)

**Patentansprüche**

1. Vollaustenitischer Schweißzusatzwerkstoff zur Erzeugung von gegen Loch- und Spaltkorrosion und/oder den Angriff oxidierender Medien beständigen Verschweißungen korrosionsbeständiger Stähle, die eine Wirksumme % Cr + 3,3 % Mo + 30 x % N gleich oder größer 35 haben, oder zur Erzeugung von entsprechenden Auftragschweißungen, der aus (Massengehalte in %)

   höchstens 0,04 % C,
   höchstens 1,0 % Si,
   2,0 bis 8,9 % Mn,
   4,0 bis 9,0 % Mo,
   15,0 bis 30,0 % Ni,
   20,0 bis 30,0 % Cr,
   0,31 bis 0,8 % N,
   höchstens 0,01 % Ti,
   höchstens 0,0050 % B,
   höchstens 0,040 % P,
   höchstens 0,030 % S,
   0 bis 2,0 % Cu,
   0 bis 1,0 % V,
   0 bis 1,0 % W,
   0 bis 1,0 % Nb,
   Rest Eisen.

   besteht und eine Wirksumme (% Cr) + 3,3 (% Mo) + 30 (% N) größer 52 hat.

2. Schweißzusatzwerkstoff nach Anspruch 1, **dadurch gekennzeichnet,** daß der Chromgehalt mehr als 25 % und weniger als 27 % beträgt.

3. Schweißzusatzwerkstoff nach Anspruch 1, **dadurch gekennzeichnet,** daß der Molybdängehalt 4,5 bis 6 % und der Stickstoffgehalt 0,4 bis 0,6 % beträgt.

4. Schweißzusatzwerkstoff nach Anspruch 1, 2 oder 3, der eine Schweiße niederlegt, die eine Dehngrenze von mehr als 370 N/mm$^2$ und eine Härte von mehr als 200 HV10 aufweist.

5. Schweißzusatzwerkstoff nach einem der Ansprüche 1 bis 4 zum Schweißen von Bauteilen für Bleichstufen in der Papier- und Zellstoffindustrie.

6

6. Schweißzusatzwerkstoff nach einem der Ansprüche 1 bis 4 zum Schweißen von Bauteilen für die Förderung, den Transport und die Lagerung von Öl oder Gas.

7. Schweißzusatzwerkstoff nach einem der Ansprüche 1 bis 4 zum Schweißen von Bauteilen für Rauchgasentschwefelungsanlagen.

8. Schweißzusatzwerkstoff nach einem der Ansprüche 1 bis 4 zum Schweißen von Bauteilen für den Einsatz in Seewasser oder Seewasser enthaltenden Medien.

9. Schweißzusatzwerkstoff nach einem der Ansprüche 1 bis 4 zum Schweißen von Bauteilen für Anlagen zum Sammeln, Transportieren, Lagern und Behandeln von Abwasser und kontaminierten Schlämmen.

10. Schweißzusatzwerkstoff nach einem der Ansprüche 1 bis 4 zum Schweißen von Bauteilen, die Korrosionsbeanspruchungen ausgesetzt sind, die durch hohe Chloridgehalte und/oder oxidierende Bedingungen charakterisiert sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X,P | EP-A-0 438 992 (AVESTA AKTIEBOLAG)<br>* das ganze Dokument *<br>--- | 1,2 | B23K35/30<br>C22C38/58<br>C22C38/00 |
| X | FR-A-2 305 267 (VEREINIGTE EDELSTAHLWERKE AKTIENGESELLSCHAFT)<br>* Ansprüche 1,2 *<br>--- | 1,2 | |
| X | EP-A-0 342 574 (THYSSEN EDELSTAHLWERKE AG)<br><br>* Ansprüche 1-12 *<br>--- | 1-3,5-7,<br>9 | |
| X | US-A-4 302 247 (ABE ET AL.)<br>* Ansprüche 1-5 *<br>--- | 1,2 | |
| A | FR-A-2 072 434 (FIRMA GEBR.BÖHLER & CO. AKTIENGESELLSCHAFT)<br>* Anspruch 1 *<br>--- | 1,2 | |
| A | FR-A-2 074 433 (FIRMA GEBR. BÖHLER & CO. AKTIENGESELLSCHAFT)<br>* Anspruch 1 *<br><br>----- | 1,2 | |

**RECHERCHIERTE SACHGEBIETE (Int. Cl.5 )**

B23K
C22C

Der vorliegende Recherchenbericht wurde für alle Patentansprüche erstellt

| Recherchenort | Abschlußdatum der Recherche | Prüfer |
|---|---|---|
| DEN HAAG | 30 JUNI 1992 | LIPPENS M.H. |